# NEUE EUROPÄISCHE PATENTSCHRIFT

(11) **EP 0 906 381 B2**
(45) Veröffentlichungstag und Bekanntmachung des Hinweises auf die Entscheidung über den Einspruch: **15.07.2009**
(45) Hinweis auf die Patenterteilung: 11.02.2004
(21) Anmeldenummer: 97923997.7
(22) Anmeldetag: 24.05.1997
(51) Int. Cl.: C11C 5/00

(54) **VERFAHREN ZUR HERSTELLUNG EINES GEGENSTANDES AUF PARAFFINBASIS UND GEGENSTAND AUF PARAFFINBASIS**
PROCESS FOR PRODUCING A PARAFFIN-BASED OBJECT AND SUCH AN OBJECT
PROCEDE DE PRODUCTION D'UN OBJET A BASE DE PARAFFINE, ET OBJET A BASE DE PARAFFINE

(30) Priorität: 19.06.1996 DE 19624454; 23.10.1996 DE 19643719; 27.02.1997 DE 19707909
(43) Veröffentlichungstag der Anmeldung: 07.04.1999
(60) Teilanmeldung: 03025154.0
(73) Patentinhaber: Sasol Wax GmbH, 20457 Hamburg (DE)
(72) Erfinder: MATZAT, Norbert, D-22457 Hamburg (DE); MATTHÄI, Michael, D-24558 Henstedt-Ulzburg (DE); STARKE, Claus, D-02782 Seifhennersdorf (DE)
(74) Vertreter: Müller, Enno
(86) Internationale Anmeldenummer: PCT/EP1997/002670
(87) Internationale Veröffentlichungsnummer: WO 1997/048784

(56) Entgegenhaltungen:
- WO-A-97/09072
- DE-A- 4 201 529
- DE-C- 174 471
- DE-U- 29 516 245
- US-A- 5 234 689
- DATABASE WPI Section Ch, Week 8113 Derwent Publications Ltd., London, GB; Class D23, AN 81-22459D XP002039959 & JP 56 011 995 A (KYOSHIN CO LTD) , 5.Februar 1981
- DATABASE WPI Section Ch, Week 9517 Derwent Publications Ltd., London, GB; Class A97, AN 95-126318 XP002039960 & JP 07 048 591 A (PEGASUS CANDLE KK) , 21.Februar 1995
- DATABASE WPI Section Ch, Week 8527 Derwent Publications Ltd., London, GB; Class D21, AN 85-162123 XP002039961 & JP 60 092 209 A (HASEGAWA CO LTD) , 23.Mai 1985
- DATABASE WPI Section Ch, Week 7639 Derwent Publications Ltd., London, GB; Class C03, AN 76-73323X XP002039962 & JP 51 030 127 B (DAINIPPON PYRETHROIDAL KK) , 30.August 1976
- SOAP COSMETICS CHEMICAL SPECIALTIES, Bd. 48, Nr. 7, 1972, NEW YORK US, Seiten 35-60, XP002039958 G. CARSCH: "Fragrance candles"
- J. Müller "Vom Wachs zur Kerze", Verlag Zürcher Forum, Zürich, 1993, S. 24-25, 31
- Seifen - Öle - Fette - Wachse, Heft 6, 1972, Sonderdruck, H. Hartmann et al. "Parfümierte Kerzen"

## Beschreibung

Herstellungsverfahren eines Gegenstandes auf Paraffinbasis, insbesondere einer Kerze, mit einem Anteil an einem Riechstoff sind bekannt. Beispielsweise wird dem Paraffin-Grundwerkstoff einer Kerze ein gewünschter Riechstoff, beispielsweise ein ätherisches Öl, beigemischt. Aufgrund einer sehr geringen Löslichkeit solcher Riechstoffe in Paraffin kann aber kaum mehr als eine Konzentration von 2 - 3 %, bezogen auf das Volumen, in einer solchen Kerze bezüglich Riechstoffen erreicht werden. Darüber hinaus ist die Löslichkeit von Riechstoffen im Paraffin stark temperaturabhängig. Bringt man Riechstoffe in flüssiges Paraffin ein, besteht auch die Gefahr, daß beim Auskristallisieren des Paraffins diese Riechstoffe aus dem Stoffsystem herausgedrückt werden. Die Riechstoffe können sich als öliger Film auf der äußeren Schicht der Kerze abscheiden.

Zur Schaffung eines bestimmten gewünschten Duftes werden bekanntlich in der Regel eine Vielzahl von Riechstoffen als Einzelverbindungen gemischt. Typischerweise werden oft 20 bis 40 einzelne Riechstoffe zu einer bestimmten Duftnote zusammengestellt. Die Mischung erfolgt in einem Lösungsmittel, welches selbst ein Duftstoff sein kann aber auch geruchlos sein kann. Dieses Lösungsmittel wird auch, im Hinblick auf seine bezüglich der einzelnen Duftstoffe fixierende Wirkung, als Fixateur bezeichnet. Die Konzentration in dem Fixateur kann unterschiedlich sein. Im Zusammenhang vorliegender Anmeldung ist auf den Gewichtsanteil der Riechstoffe selbst abgestellt.

Ein erheblicher Anteil an Kerzen wird technologisch nach dem Pulverpreßverfahren hergestellt. Hier ist es nur möglich, Riechstoffe einzubringen, indem man einen Paraffinpreßling mit einer entsprechenden Tauchschicht, in welcher ein Riechstoff eingearbeitet ist, versieht. Auch die Tauchschicht besteht im wesentlichen aus,Paraffin. Hierbei setzt aber in gleicher Weise die bereits angesprochene geringe Löslichkeit der Riechstoffe in Paraffin die Grenze. Bezogen auf die Gesamtmasse einer solchermaßen hergestellten Kerze kann daher nach diesem Verfahren nur eine sehr geringe Riechstoffkonzentration bzw. ein sehr geringer Riechstoffanteil erreicht werden.

Es ist auch bereits versucht worden, Riechstoffe, die in der Regel als ölige Substanz vorliegen, durch Einsprühen in verfestigtes Paraffinmaterial, nämlich Paraffinpulverteilchen, einzubringen. Bei einem nachfolgenden Preßvorgang ist dann aber die Erscheinung aufgetreten, daß diese flüssigen Riechstoffe beim Preßvorgang als Trennmittel zwischen den einzelnen Paraffinpartikeln wirken und daher keine gewünschten festen Preßlinge erreicht werden konnten.

Im Hinblick auf den vorstehend aufgezeigten Stand der Technik beschäftigt sich die Erfindung mit der technischen Problematik einen Gegenstand auf Paraffinbasis mit einem hohen Riechstoffanteil zur Verfügung zu stellen.

Der Riechstoff wird, was nicht Gegenstand der geschützten Erfindung ist, in einem Ester, insbesondere einem organischen Ester, beispielsweise Triglycerid gelöst und die so erhaltene Lösung ihrerseits in das Paraffin eingebracht bzw. gelöst. Es ist erkannt worden, daß flüssige oder ölige Riechstoff-Substanzen, wie insbesondere ätherische Öle, in einfacher Weise dadurch verfestigt werden können, daß sie in einen organischen Ester einbracht werden. Dieser organische Ester kann sich einzeln oder als Mischung aus Bestandteilen wie Palmöl, Palmstearin, Palmkernöl, Rapsöl oder tierischem Talg zusammensetzen. Der hier verwendete Begriff "Riechstoff" umfaßt nicht nur die Naturprodukte, wie etwa ätherische Öle, sondern auch die synthetisch produzierten Duft- und Riechstoffe. Ein wie vorstehend gewonnenes Riechstoffkonzentrat, also eine Lösung von einem Riechstofföl oder einer Riechstoffflüssigkeit in einem Ester, liegt sodann in fester Form vor. In den physikalischen Eigenschaften entspricht ein solchermaßen gewonnenes Riechstoffkonzentrat etwa einem Gemisch von 80 % pastenförmigen Paraffin mit etwa 20 % Palmöl, insbesondere einem solchen Palmöl, das bei etwa 30° C eine Penetration von 6 mm⁻¹ aufweist. Insgesamt hat dann ein solches Riechstoffkonzentrat die Eigenschaft eines wachsartigen Stoffes mit einem gegenüber dem Ölanteil wesentlich erhöhten Erstarrungspunkt von etwa 37° C und einer Penetration bei 30° C von ca. 130 mm⁻¹. Das Riechstoffkonzentrat liegt in fester Form vor.

Der Riechstoffanteil in der obengenannten Lösung kann mehr als 10 Gew.-% und bis zu 80 Gew.-% betragen.

Im weiteren ist es auch bevorzugt, daß bis zu 50 Gew.-% der Lösung aus einem Mikrowachs bestehen. Mikrowachse sind bekanntlich wie Paraffingemische aus unterschiedlichen Kohlenwasserstoffen, jedoch enthalten sie überwiegend Isoparaffine. Überraschend hat sich gezeigt, daß die Mikrowachse das Kristallisationsverhalten der Ester, insbesondere der Triglyceride vorteilhaft beeinflussen. Insbesondere sind hier Mikrowachse angesprochen, die einen Erstarrungspunkt im Bereich von 68° C bis 64° C aufweisen, bei einem Anteil an iso-Paraffinen von mehr 75 % und einem Ölgehalt von größer als 3,5 %.

Ein so gewonnenes Riechstoffkonzentrat kann in einfacher Weise in Paraffin eingebracht werden. Es kann beispielsweise hinsichtlich der Pulverpreßtechnologie in kleine, pulverartige Bestandteile zerlegt werden und mit der Paraffin-Pulvermasse vor dem Verpressen vermischt werden, derart, daß es zu einer weitgehend homogenen Verteilung der Duftstoffe in einer solchermaßen dann hergestellten Kerze kommt. In dem genannten Konzentrat wird ein Anteil von Duftstoffen von bis zu 60 % erreicht. Hierbei wird von einem Gewichtsanteil ausgegangen.

Das genannte Riechstoffkonzentrat ist nicht nur bei pastenförmigen Kerzengrundstoffen einsetzbar, sondern grundsätzlich bei allen Kerzenrohstoffen. Insbesondere bei solchen Paraffinen bzw. Stoffen auf Basis von Paraffin mit einem Schmelzpunkt bis zu 105° C und/oder einem Paraffin-Anteil von mindestens 75 %.

Hinsichtlich des Riechstoffkonzentrates ist es weiter im Unterschied zu vorstehendem bevorzugt, daß dieses auch in flüssiger Form in die flüssige Kerzengrundmasse eingebracht wird und anschließend gemeinsam mit dieser Kerzengrundmasse zu einem Pulver versprüht wird. Das Riechstoffkonzentrat kann auch über die vorgenannten 60 % hinaus einen Anteil von bis zu 70 Gew.-% an Parfümöl besitzen. Dies entspricht bis zu 35 % (Gew.-%) an Riechstoffen in dem fertigen Produkt, der Kerze.

Es wird ein Riechstoffkonzentrat verwendet, welches einen Anteil an einem Ester enthält, insbesondere einem organischen Ester, wie insbesondere einem solchen auf Basis von Triglyceriden, wie beispielsweise Palmöl, Palmstearin, Palmkernöl, Rapsöl, tierischer Talg und/oder einem Ester-Wachssäuregemisch, in welchem Riechstoffkonzentrat ein Riechstoff, insbesondere ein Riechstofföl, wie bspw. ein ätherisches Öl, enthalten ist. Es kann auch ein Ester-Wachssäuregemisch enthalten sein, welches sich als Mischung zusammensetzen kann aus Fettsäureglyzeriden, Wachssäureester, Montanwachsen oder dergleichen. Der Anteil von Riechstoffen bzw. Riechstoffölen an dieser Mischung kann zwischen 20 und 80 % liegen, vorzugsweise bei einem Drittel bis zwei Drittel, bezogen auf das Gewicht. Es ist auch in weiterer Ausgestaltung bevorzugt, daß der nach dem Riechstoff verbleibende Anteil von ein Drittel bis zwei Drittel bezogen auf das Gewicht, bis zu 50 % aus einem Mikrowachs (mikrokristallinen Wachs bzw. Paraffin) besteht. Hinsichtlich des Begriffes Mikrowachse wird auch auf die Ausführungen weiter oben verwiesen. Die Riechstoffe bzw. das Riechstofföl ist bevorzugt in dem Ester bzw. den genannten Modifikationen und/oder dem Anteil an Mikrowachs gelöst.

Der Gegenstand auf Paraffinbasis mit einem hohen Riechstoffanteil ist beispielsweise eine Kerze. Dieser Gegenstand zeichnet sich dadurch aus, daß er aus einem wachsartigen Stoff mit einem Anteil an organischem Ester und/oder einem Ester-Wachssäuregemisch besteht, wobei der Paraffinanteil als solcher einen Erstarrungspunkt von 55° C oder weniger aufweist und der Ester-Anteil als solcher einen Erstarrungspunkt von 35° C oder mehr, und wobei darüber hinaus ein Riechstoffanteil von 3 % oder mehr, insbesondere 5 % oder mehr, bezogen auf das Gewicht, in dem Gegenstand enthalten ist. Als derzeit bevorzugte Obergrenze kann 35 % angegeben werden. Hinsichtlich des Paraffins spricht man hier auch von niedriggrätigem Paraffin. Der genannte Paraffinanteil besitzt in dem Temperaturbereich eines Erstarrungspunktes von 55° C oder weniger eine sehr geringe Härte. Bei ca. 40° C liegt beispielsweise nur noch ein pastenartiger Stoff vor. Dagegen besitzt der Anteil an organischem Ester oder dem Ester-Wachssäuregemisch bereits bei Temperaturen von 30° oder weniger eine sehr beachtliche Härte. Beispielsweise weisen sowohl gehärtetes Palmöl als auch gehärteter Rinderspeisetalg, beides Stoffe, welcher unter die genannten Begriffe fallen, bei 30° eine Penetration von 6 mm⁻¹ auf. Mit dem Begriff "Paraffin" ist hier auf technisches Paraffin abgestellt, welches bekanntlich aus Erdöl, Teeren, in einer Teilsynthese oder auch mittels der Fischer-Tropsch-Synthese gewonnen wird. Es handelt sich üblicherweise um Gemische, bestehend aus n-Alkanen und iso-Alkanen unterschiedlicher C-Kettenlängen, und bei den iso-Alkanen zusätzlich unterschiedlicher Strukturen. Weiter kann der Gegenstand einen Anteil an Mikrowachsen enthalten. Der Anteil an Mikrowachs (siehe hierzu auch Ausführungen weiter oben) kann an dem Gegenstand also bspw. der Kerze bis zu 30 % betragen. Überraschend hat sich gezeigt, daß die vorstehend angegebene Mischung von Paraffin mit einem organischen Ester und/oder einem Ester-Wachssäuregemisch und/oder einem Anteil an Mikrowachs zu einem wachsartigen Stoff führt, der einerseits eine für die angestrebten Produkte noch akzeptable Härte aufweist, andererseits aber auch ein sehr gutes Aufschmelzverhalten zeigt. Dadurch, daß der Ester-Anteil bzw. der Anteil an Mikrowachs für sich einen hohen Anteil an Riechstoffen aufweist, beispielsweise bis zu 60 %, und er des weiteren homogen in der Kerze oder dem aus Paraffin hergestellten Gegenstand verteilt ist, hat dieser Gegenstand insgesamt einen relativ hohen Riechstoffanteil, der homogen darin verteilt ist. Mikroskopisch gesehen kann aber auch festgehalten werden, daß der Riechstoffanteil in dem Ester und/oder dem Mikrowachs konzentriert ist. Der Paraffinanteil kann insbesondere aus einem Gemisch von iso-Paraffinen und n-Paraffinen bestehen. Innerhalb dieses Gemisches beträgt der iso-Anteil mindestens 50 % mit einer C-Kettenlänge von C 16 bis C 45 und einem Maximum zwischen C 26 und C 34. Dieser Paraffinanteil besitzt einen Erstarrungspunkt von vorzugsweise unterhalb 45°. Bei den genannten organischen Estern handelt es sich ganz bevorzugt auch um Triglyceride. Es können Kerzen hergestellt werden, welche bei großen Abmessungen im Querschnitt zu einem einheitlichen Aufschmelzverhalten über den Querschnitt führen. Sie weisen danach ein vorteilhaftes Abbrennverhalten auf. Im einzelnen kann der Anteil an organischem Ester und/oder an Ester-Wachssäuregemisch in dem wachsartigen Stoff sich einzeln oder als Mischung zusammensetzen aus dem bereits genannten Palmöl, weiter aus Palmstearin, Palmkernöl, Rapsöl, tierischen Talgen usw. Die Verbindungsklasse der Ester-Wachssäuregemische beinhaltet insbesondere auch Montanwachse, Bienenwachs, Carnaubawachs usw. Es handelt sich hier um langkettige Ester. Von Bedeutung ist, daß sowohl die organischen Ester als auch die Ester-Wachssäuregemische ein hohes Ölbindevermögen besitzen. Dies ist jedoch im einzelnen jeweils unterschiedlich ausgebildet. Diese Eigenschaft der genannten Stoffklassen ist im Hinblick auf den hier beschriebenen Stoff besonders vorteilhaft, da der Paraffinanteil mit einem Erstarrungspunkt von 55° oder weniger einen gewissen, mit abnehmenden Erstarrungspunkten zunehmenden, Ölanteil aufweist. Der Paraffinanteil kann einen Erstarrungspunkt bis hinunter bis zu 30° etwa aufweisen. Bevorzugt ist ein Erstarrungspunkt des Paraffinanteiles im Bereich von 30° bis 45°. Der Anteil von Paraffin in dem hier beschriebenen wachsartigen Stoff liegt bevorzugt im Bereich von 45 bis 95 %.

Hinsichtlich der Stoffgruppe der organischen Ester können beispielsweise Fettsäureglyceride, Wachssäureester oder auch die genannten Montanwachse zum Einsatz kommen.

### Beispiele:

Es wurde ein Paraffin mit einem gewissen Ölanteil, mit einem Erstarrungspunkt von 36° C mit gehärtetem Palmöl versetzt, wobei das gehärtete Palmöl einen Anteil eines ätherischen Öles von 30 % aufwies. Während der Paraffinanteil alleine pastenförmigen Charakter besaß, zeigte sich nach der Mischung mit dem gehärtetem Palmöl, welches bei 30 ° C eine Penetration von etwa 6 mm⁻¹ aufweist, in einem Verhältnis von 1:1, eine Penetration bei 30 ° C von etwas weniger als 46 mm⁻¹.

Bei einem weiteren Versuch wurde anstatt gehärtetem Palmöl Rinderspeisetalg zugesetzt. Es ergab sich bei einem gleichen Mischungsverhältnis und einem gleichen Anteil an Riechstoff eine Penetration von etwas weniger als 43 mm⁻¹. Dagegen haben sich in beiden Fällen die Erstarrungspunkte des erhaltenen wachsartigen Stoffes nur geringfügig gegenüber dem Erstarrungspunkt des Paraffin-Ausgangsproduktes erhöht. Während das Paraffin-Ausgangsprodukt einen Erstarrungspunkt von etwa 36° C aufweist, wies die Mischung aus 50 % Paraffinanteil und 50 % gehärtetem Palmöl einen solchen von 39° C auf. Die Mischung aus 50 % Paraffinanteil und 50 % gehärtetem Rinderspeisetalg wies einen solchen von 40° C auf.

## Patentansprüche

1. Gegenstand auf Paraffinbasis, beispielsweise Kerze, mit einem hohen Riechstoffanteil, **dadurch gekennzeichnet, dass** der Gegenstand aus einem wachsartigen Stoff besteht mit einem Anteil an einem organischen Ester, der sich einzeln oder als Mischung zusammensetzt aus Palmöl, Palmstearin, Palmkernöl, Rapsöl oder tierischem Talg und/oder einem Ester-/Wachssäuregemisch mit Montanwachs, Bienenwachs oder Carnaubawachs, dass der Riechstoffanteil in dem Gegenstand homogen verteilt ist und dass der Riechstoffanteil mehr als 10% beträgt.

2. Gegenstand auf Paraffinbasis, bspw. Kerze, mit einem hohen Riechstoffanteil, **dadurch gekennzeichnet, dass** der Gegenstand aus einem wachsartigen Stoff mit einem Anteil an organischem Ester und/oder einem Ester-/Wachssäuregemisch besteht und dass der Riechstoffanteil mehr als 30% betragt.

3. Gegenstand nach Anspruch 1 oder 2, **gekennzeichnet durch** einen Anteil von bis zu 50 Gewichtsprozent an Mikrowachs.

4. Gegenstand nach einem der Ansprüche 1 bis 3, **dadurch gekennzeichnet, dass** der Riechstoffanteil in dem Ester und/oder dem Mikrowachs konzentriert ist.

5. Gegenstand nach Anspruch 1, **dadurch gekennzeichnet, dass** der Riechstoffanteil mehr als 20% beträgt.

6. Gegenstand nach Anspruch 1, **dadurch gekennzeichnet, dass** der Riechstoffanteil mehr als 30% beträgt.

## Claims

1. A paraffin-based object, for example a candle, having a high proportion of perfume, **characterised in that** the object consists of a waxy substance having a proportion of an organic ester which is formulated on its own or as a mixture of palm oil, palm stearin, palm kernel oil, rape seed oil, or animal tallow, and/oder of an ester-eax acid mixture comprising montan wax, bees wax, or carnauba wax, that the proportion of perfume is homogenuously distributed in the paraffin-based object and that the perfume proportion is greater than 10%.

2. A paraffin-base object, for example a candle, having a high proportion of perfume, **characterised in that** the object consists of a waxy substance having a proportion of an organic ester and/or of an ester-wax acid mixture and **in that** the perfume proportion is greater than 30%.

3. An object according to claim 1 or 2, **characterised by** a proportion of up to 50% by weight of microwax.

4. An object according to one of the claims 1 to 3, **characterised in that** the perfume proportion is concentrated in the ester and/or the microwax.

5. An object according to claim 1, **characterised in that** the perfume proportion is greater than 20%.

6. An object according to claim 1, **characterised in that** the perfume proportion is greater than 30%.

## Revendications

1. Objet à base de paraffine, par example une bougie, à forte teneur en substance odorante, **caractérisé en ce que** l'objet est composé d'une substance cireuse avec une quantité d'un ester organique, qui est constitué d'un élément ou d'un mélange d'éléments choisis parmi l'huile de palme, la séarine de palme, l'huile de palmiste, l'huile de colza ou un suif animal et/ou un mélange ester/acide cireux avec une cire minérale, une cire d'abeille ou une cire de carnauba, que le teneur de substance odorante est distribué homogènement dans l'objet et que la quantité de substance odorante est supérieur à 10%.

2. Objet à base de paraffine, par example une bougie, à haute teneur en substance odorante, **caractérisé en ce que** l'objet est constitué d'une substance cireuse avec une quantité d'un ester organique et/ou d'un mélange ester/acide cireux et **en ce que** la quantité de substance odorante est supérieur à 30%.

3. Objet selon la revendication 1 ou 2, **caractérisé en ce que** la quantité atteint jusqu'à 50% en poids d'une cire microcristalline.

4. Objet selon l'une des revendications 1 à 3, **caractérisé en ce que** la quantité de substance odorante dans l'ester et/ou dans la cire microcristalline est concentrée.

5. Objet selon la revendacation 1, **caractérisé en ce que** la quantité de substance odorante est supérieur à 20%.

6. Objet selon la revendication 1, **caractérisé en ce que** la quantité de substance odorante est supérieur à 30%
